# EUROPÄISCHE PATENTANMELDUNG

(11) **EP 4 574 721 A1**
(43) Veröffentlichungstag der Anmeldung: **25.06.2025**
(21) Anmeldenummer: 24221462.5
(22) Anmeldetag: 19.12.2024
(51) Int. Cl.: B65G 47/84

(54) **DÄMPFUNGSELEMENT**

(30) Priorität: 21.12.2023 DE 202023107577 U
(71) Anmelder: KRONES AG, 93073 Neutraubling (DE)
(72) Erfinder: HARTWICH, Thomas, 93073 Neutraubling (DE); LANGE, Janis, 93073 Neutraubling (DE); MERL, Erik, 93073 Neutraubling (DE)
(74) Vertreter: v. Bezold & Partner Patentanwälte - PartG mbB

(57) **Zusammenfassung**

Die Erfindung betrifft u.a. ein Dämpfungselement (20) für eine Behälteraufnahmetasche (18) eines Behältertransportsterns (10). Das Dämpfungselement (20) weist einen elastisch verformbaren Dämpfungsabschnitt (22), der eine Kontaktfläche (24) zum Kontaktieren eines Behälters (12) aufweist, und einen Montageabschnitt (32) zum Montieren des Dämpfungselements (20) in der Behälteraufnahmetasche (18) des Behältertransportsterns (10) auf. Der Dämpfungsabschnitt (22) und der Montageabschnitt (32) sind aus mehreren aneinander angrenzenden, vorzugsweise additiv gefertigten, Materialschichten gebildet.

## Beschreibung

### Technisches Gebiet

Die Erfindung betrifft ein Dämpfungselement für eine Behälteraufnahmetasche eines Behältertransportsterns. Die Erfindung betrifft ferner einen Transportstern zum Transportieren von Behältern. Die Erfindung betrifft ferner ein Verfahren und ein Computerprogrammprodukt.

### Technischer Hintergrund

Fördersysteme in Behälterbehandlungsanlagen zum Abfüllen und Verschließen von Behältern, wie Flaschen, können Transportsterne aufweisen. Transportsterne sind bspw. aus der EP 2 447 1 94 A1 und der EP 4 197 945 A1 bekannt.

Ein Transportstern ist eine Rundläufer-Förderer, der Behälter drehend um eine Mittelhochachse des Transportsterns transportieren kann. Beispielsweise kann ein Transportstern als ein Einlaufstern oder ein Auslaufstern einer Rundläufer-Behälterbehandlungsvorrichtung, wie beispielsweise ein Füllerkarussell oder Verschließerkarussell, angeordnet sein. Ein Transportstern kann Behälteraufnahmetaschen aufweisen, in denen die Behälterwährend des Transports aufgenommen sind. Bei der Übernahme eines Behälters in eine Behälteraufnahmetasche kann es zu einem Beschleunigungs- und Richtungswechsel des Behälters kommen. Um einen Verschleiß des Behälters und der Behälteraufnahmetasche möglichst gering zu halten, sollte die Übernahme und der Transport möglichst sanft erfolgen.

Der Erfindung liegt die Aufgabe zu Grunde, eine verbesserte Technik zum sanften Übernehmen und Transportieren von Behältern mittels eines Transportsterns zu schaffen, wobei die Technik bevorzugt bei unterschiedlichsten Behälterformaten eingesetzt und auf einfache Weise an diese angepasst werden kann.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft ein Dämpfungselement für eine Behälteraufnahmetasche eines Behältertransportsterns. Das Dämpfungselement weist einen elastisch verformbaren Dämpfungsabschnitt, der eine Kontaktfläche zum Kontaktieren eines Behälters aufweist, und einen, vorzugsweise elastisch verformbaren, Montageabschnitt zum Montieren des Dämpfungselements in der Behälteraufnahmetasche des Behältertransportsterns auf. Vorzugsweise können der Dämpfungsabschnitt und der Montageabschnitt (jeweils) aus mehreren aneinander angrenzenden, vorzugsweise additiv gefertigten, Materialschichten gebildet sein.

Vorteilhaft kann das Dämpfungselement ein Abbremsen eines Behälters beim Einlaufen des Behälters in die Behälteraufnahmetasche ermöglichen. Der Behälter kann auf die Kontaktfläche treffen und sodann kann der Behälter mittels elastischer Verformung des Dämpfungsabschnitts abgebremst werden. Insgesamt kann damit vorteilhaft eine besonders sanfte Übernahme und ein besonders sanfter Transport des Behälters ermöglicht werden, wodurch eine Beschädigung des Behälters verhindert werden kann. Die Herstellung des Dämpfungselements in mehreren, aneinander angrenzenden Materialschichten mittels additiver Fertigung ist dabei besonders vorteilhaft. Es muss nicht für jede mögliche, an ein jeweiliges Behälterformat angepasste Form des Dämpfungselements ein eigenes Werkzeug, z. B. zum Schäumen, Gießen oder Spritzgießen des Dämpfungselements konstruiert, produziert und ggf. über Jahrzehnte aufbewahrt werden. Stattdessen ermöglicht die additive Fertigung eine flexibel anpassbare, bedarfsgerechte und schnelle (Um-) Konstruktion und Herstellung des Dämpfungselements aus einem elastisch verformbaren Material.

In einem Ausführungsbeispiel sind die Materialschichten aus einem elastisch verformbaren (z. B. 3D-druckbaren) Kunststoff, vorzugsweise einem thermoplastischen Polyurethan (TPU), besonders bevorzugt ein TPU mit einer Shore-Härte A zwischen ca. 70 und ca. 95. Vorteilhafte kann damit bei der Herstellung des Dämpfungselements bereits ein elastisch verformbares (flexibles) und widerstandsfähiges Material genutzt werden.

In einem weiteren Ausführungsbeispiel weist das Dämpfungselement insgesamt konstruktionsbedingt (z. B. Wandstärken, Formgebung, Struktur) und materialbedingt (z. B. Material des Dämpfungsabschnitts und des Montageabschnitts) eine Shore-Härte A zwischen ca. 30 und ca. 90, vorzugsweise zwischen ca. 30 und ca. 80, besonders bevorzugt zwischen ca. 30 und ca. 50, auf.

In einem weiteren Ausführungsbeispiel ist die Kontaktfläche aufgeraut, und/oder die Kontaktfläche weist eine vorbestimmte Profilierung, Texturierung oder Musterung auf, zum Erhöhen einer Reibung zwischen dem Behälter und der Kontaktfläche. Vorteilhaft kann der Behälter somit bereits beim Entlanggleiten an der Kontaktfläche während des Aufnehmens des Behälters in der Behälteraufnahmetasche abgebremst werden.

In einer Ausführungsform gehen der Dämpfungsabschnitt und der Montageabschnitt direkt ineinander über. Alternativ oder zusätzlich sind der Dämpfungsabschnitt und der Montageabschnitt integral-einstückig miteinander verbunden. Alternativ oder zusätzlich ist das Dämpfungselement einteilig. Vorteilhaft kann damit eine besonders einfache und zuverlässige Konstruktion des Dämpfungselements ermöglicht werden.

In einer weiteren Ausführungsform entspricht eine gemeinsame Außenkontur, die durch den Dämpfungsabschnitt und den Montageabschnitt gebildet ist, im Wesentlichen einer Hutaußenkontur, vorzugsweise einer Melonenhutaußenkontur. Optional kann der Dämpfungsabschnitt eine Hutkrone der Hutaußenkontur bilden. Alternativ oder zusätzlich kann der Montageabschnitt eine Hutkrempe der Hutaußenkontur bilden. Vorteilhaft kann damit einerseits eine gute Handhabbarkeit und andererseits eine gute Dämpfungswirkung des Dämpfungselements ermöglicht werden.

In einer Ausführungsvariante weist der Dämpfungsabschnitt eine Wannenform oder Schalenform auf. Alternativ oder zusätzlich kann der Dämpfungsabschnitt eine, vorzugsweise zentrale, Ausnehmung, vorzugsweise Vertiefung, aufweisen. Vorteilhaft kann die Ausnehmung zusammen mit der elastischen Verformbarkeit des Dämpfungsabschnitts ermöglichen, dass der Dämpfungsabschnitt zum Dämpfen des Kontakts des Behälters elastisch zusammendrückbar ist.

In einer weiteren Ausführungsvariante weist der Dämpfungsabschnitt eine (zum Beispiel elastisch verformbare) Kontaktlippe auf, an der die Kontaktfläche angeordnet ist. Vorteilhaft kann die Kontaktlippe eine besonders wirksame Dämpfung beim Auftreffen des Behälters auf die Kontaktfläche bewirken.

In einem Ausführungsbeispiel ist die Kontaktlippe bogenförmig, vorzugsweise C-förmig. Alternativ oder zusätzlich kann die Kontaktfläche in einem Scheitelbereich der Kontaktlippe angeordnet sein. Alternativ oder zusätzlich kann die Kontaktlippe eine Ausnehmung, vorzugsweise Vertiefung, des Dämpfungsabschnitts seitlich begrenzen. Alternativ oder zusätzlich kann sich eine Materialstärke der Kontaktlippe hin zu einem freien Ende der Kontaktlippe, vorzugsweise kontinuierlich und/oder gleichmäßig, erhöhen. Alternativ oder zusätzlich kann die Kontaktlippe einen im Wesentlichen keilförmigen Querschnitt in einer Ebene senkrecht zu einem Längsverlauf der Kontaktlippe aufweisen. Vorteilhaft kann damit eine Konstruktion der Kontaktlippe eine besonders wirksame Dämpfung beim Auftreffen des Behälters ermöglichen.

In einem weiteren Ausführungsbeispiel weist der Dämpfungsabschnitt ferner eine (z. B. elastisch verformbare) Seitenwand auf, die mit der Kontaktlippe verbunden ist, vorzugsweise an einer Längskante der Kontaktlippe und/oder entlang eines gesamten Längsverlaufs der Kontaktlippe. Vorteilhaft kann damit die Kontaktlippe im unbelasteten Zustand und im unbelasteten Zustand gestützt und damit eine geringere Materialstärke der Kontaktlippe ermöglicht werden. Vorteilhaft kann die Seitenwand die Konstruktion insgesamt stabiler und weniger verschleißanfällig machen.

In einer Ausführungsform begrenzt die Seitenwand eine Ausnehmung, vorzugsweise Vertiefung, des Dämpfungsabschnitts bodenseitig. Alternativ oder zusätzlich kann die Kontaktlippe senkrecht auf der Seitenwand stehen.

In einer weiteren Ausführungsform weist die Seitenwand eine Materialstärke zwischen 0,4 mm und 1,5 mm, vorzugsweise zwischen 0,6 mm und 1 mm, bevorzugt rund 0,8 mm, auf. Vorteilhaft kann damit eine zum Dämpfen des Auftreffens der Behälter besonders geeignete Dämpfungswirkung des Dämpfungsabschnitts realisiert werden.

In einer weiteren Ausführungsform erhöht sich eine Materialstärke der Kontaktlippe ausgehend von der Seitenwand in eine Richtung weg von der Seitenwand und/oder hin zu einem freien Ende der Kontaktlippe, vorzugsweise stetig und/oder gleichmäßig, vorzugsweise von rd. 1 mm an der Seitenwand zu rd. 2 mm an dem freien Ende. Vorteilhaft kann damit eine zum Dämpfen des Auftreffens der Behälter besonders geeignete Dämpfungswirkung des Dämpfungsabschnitts bewirkt werden, insbesondere unter Berücksichtigung der durch die Seitenwand des Dämpfungsabschnitts realisierten Dämpfungswirkung. Besonders vorteilhaft kann damit über die gesamte Kontaktfläche hinweg eine gleichmäßige Dämpfungswirkung erzielt werden.

In einer Ausführungsvariante ist der Montageabschnitt länglich und/oder plattenförmig. Alternativ oder zusätzlich kann sich der Dämpfungsabschnitt ausgehend von einem mittigen Bereich des Montageabschnitts erstrecken. Alternativ oder zusätzlich kann der Montageabschnitt eine Ausnehmung, vorzugsweise Vertiefung, des Dämpfungsabschnitts seitlich begrenzen. Alternativ oder zusätzlich können einander entgegengesetzte Enden des Montageabschnitts über den Dämpfungsabschnitt überstehen und/oder jeweils eine Ausnehmung, vorzugsweise Vertiefung, aufweisen. Vorteilhaft kann damit eine Konstruktion des Montageabschnitts eine besonders einfache und sichere Montage des Dämpfungselements an der Behälteraufnahmetasche des Behältertransportsterns ermöglichen.

Ein weiterer Aspekt der vorliegenden Offenbarung betrifft einen Transportstern zum Transportieren von Behältern (z. B. für eine Behälterbehandlungsanlage). Der Transportstern weist mehrere Dämpfungselemente wie hierin offenbart auf. Der Transportstern weist ferner mindestens eine Sternplatte auf, die verteilt um ihren Umfang mehrere, vorzugsweise bogenförmige, Behälteraufnahmetaschen aufweist. In den Behälteraufnahmetaschen ist jeweils mindestens eines, vorzugsweise zwei, der mehreren Dämpfungselemente zum Dämpfen einer Aufnahme eines Behälters in der jeweiligen Behälteraufnahmetasche angeordnet. Vorteilhaft können mit dem Transportstern die gleichen Vorteile erzielt werden, die bereits unter Bezugnahme auf das Dämpfungselement erläutert wurden

Ein weiterer Aspekt der vorliegenden Offenbarung betrifft eine Behälterbehandlungsanlage (z. B. zum Herstellen, Reinigen, Beschichten, Prüfen, Abfüllen, Verschließen, Etikettieren, Bedrucken und/oder Verpacken von Behältern für flüssige Medien, vorzugsweise Getränke oder flüssige Nahrungsmittel). Die Behälterbehandlungsanlage weist mindestens einen Transportstern wie hierin offenbart auf.

Ein weiterer Aspekt der vorliegenden Offenbarung betrifft eine Verwendung eines Dämpfungselements wie hierin offenbart zum Dämpfen eines Auftreffens oder einer Aufnahme eines Behälters in einer Behälteraufnahmetasche (z. B. einer Sternplatte) eines Behältertransportsterns (z. B. in einer Behälterbehandlungsanlage, z. B. wie hierin offenbart).

Beispielsweise können die Behälter als Flaschen, Dosen, Kanister, Kartons, Flakons, Tuben usw. ausgeführt sein.

Ein weiterer Aspekt der vorliegenden Offenbarung betrifft ein Verfahren zum Herstellen eines Dämpfungselements wie hierin offenbart. Das Verfahren weist ein additives Fertigen des Dämpfungselements (mit dem Dämpfungsabschnitt und dem Montageabschnitt) auf, vorzugsweise in einem additiven Pulverbett-Fertigungsverfahren.

Ein weiterer Aspekt der vorliegenden Offenbarung betrifft ein Computerprogrammprodukt aufweisend (z. B. mindestens ein computerlesbares Speichermedium mit darauf gespeicherten) Anweisungen, die eine additive Fertigungsvorrichtung (z. B. 3D-Drucker) veranlassen, ein Dämpfungselement wie hierin offenbart (mit dem Dämpfungsabschnitt und dem Montageabschnitt) in einer Vielzahl von Materialschichten in einem additiven Fertigungsverfahren, vorzugsweise additiven Pulverbett-Fertigungsverfahren, herzustellen. Vorteilhaft kann damit auf einfache Weise ein Dämpfungselement mit den hierin offenbarten Vorteilen mittels einer additive Fertigungsvorrichtung hergestellt werden.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine perspektivische Darstellung eines Bereichs eines Behältertransportsterns gemäß einem Ausführungsbeispiel der vorliegenden Offenbarung;
- Figur 2: eine perspektivische Darstellung eines Dämpfungselements gemäß einem Ausführungsbeispiel der vorliegenden Offenbarung;
- Figur 3: eine Ansicht von unten auf das beispielhafte Dämpfungselement von Figur 2; und
- Figur 4: eine Schnittansicht des beispielhaften Dämpfungselements entlang einer Linie A-A in Figur 3.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

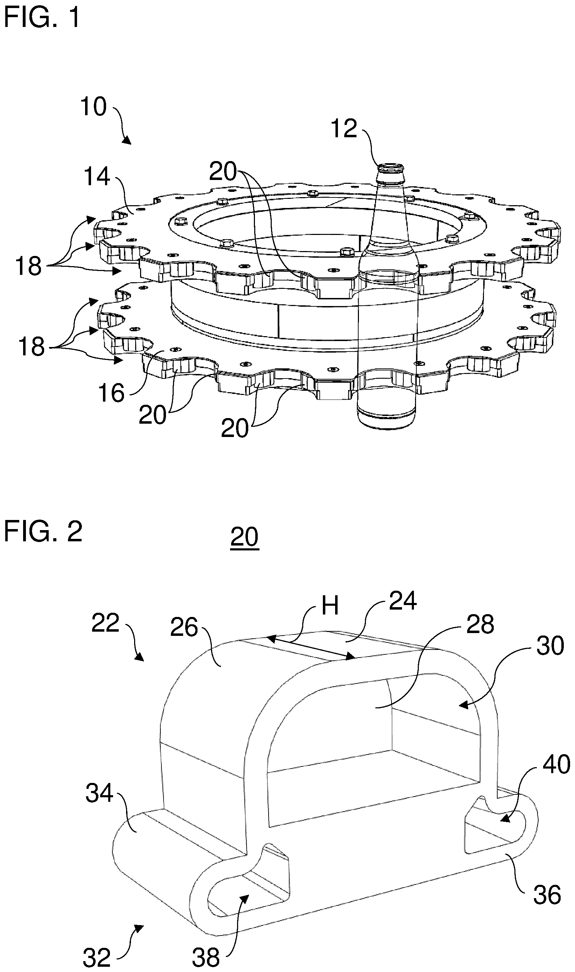

Die Figur 1 zeigt einen Rotor bzw. rotierbaren Bereich eines Transportsterns 10 zum Transportieren von Behältern 12. Rein exemplarisch ist in Figur 1 nur ein Behälter 12 dargestellt. Der Transportstern 10 kann auch als ein Transferstern, Rundläufer-Behälterförderer oder Behälterfördererkarussell bezeichnet werden.

Bevorzugt kann der Transportstern 10 in jeglichem Abschnitt einer Behälterbehandlungsanlage zum Transportieren von Behältern 12 angeordnet sein. Beispielsweise kann der Transportstern 10 als Auslaufstern oder Einlaufstern einer Rundläufer-Behälterbehandlungsvorrichtung angeordnet sein.

Alternativ kann der Transportstern 10 bspw. als Teil eines Behälterfördersystems mit mehreren weiteren Behälterförderern, z. B. weiteren Transportsternen 10, angeordnet sein.

Der Transportstern 10 kann Behälter 12 von einem Behälterförderer übernehmen, die übernommenen Behälter 12 um eine Mittelhochachse des Transportsterns 10 drehen und dann an einen weiteren Behälterförderer übergeben (nicht in Figur 1 dargestellt).

Der Transportstern 10 weist mindestens eine Sternplatte 14, 16 auf. Vorzugsweise sind zwei Sternplatten 14, 16 umfasst. Die zwei Sternplatten 14, 16 können übereinander angeordnet sein, vorzugsweise fluchtend miteinander. Die mindestens eine Sternplatte 14, 16 kann um eine Mittelhochachse des Transportsterns 10 zum Transportieren der Behälter 12 sein.

Die mindestens eine Sternplatte 14, 16 kann mehrere Behälteraufnahmetaschen 18 aufweisen. Die Behälteraufnahmetaschen 18 können, vorzugsweise gleichmäßig, verteilt um einen Außenumfang der mindestens einen Sternplatte 14, 16 herum angeordnet sein. In jeder Behälteraufnahmetasche 18 kann je ein Behälter 12 aufgenommen werden. Eine Form der Behälteraufnahmetaschen 18 kann an eine Form der Behälter 12 angepasst sein. Beispielsweise können die Behälteraufnahmetaschen 18 zylindermantelsegmentförmig ausgeführt sein.

In den Behälteraufnahmetaschen 18 ist jeweils mindestens ein Dämpfungselement 20 angeordnet. Das mindestens eine Dämpfungselement 20 je Behälteraufnahmetasche 18 kann die Aufnahme eines Behälters 12 in der jeweiligen Behälteraufnahmetasche 18 dämpfen. Im Einzelnen kann das mindestens eine Dämpfungselement 20 den Behälter 12 beim Aufnehmen in der jeweiligen Behälteraufnahmetasche 18 sanft abbremsen. Das Dämpfungselement 20 kann daher auch als ein Bremselement oder eine Bremsbacke bezeichnet werden.

Beispielsweise können je Behälteraufnahmetasche 18 zwei Dämpfungselemente 20 angeordnet sein, wie in Figur 1 dargestellt ist. Die zwei Dämpfungselemente 20 können voneinander beanstandet angeordnet sein. Bevorzugt können die zwei Dämpfungselemente 20 einander gegenüberliegen.

Die Figuren 2 bis 4 zeigen unterschiedliche Ansichten eines bevorzugten Dämpfungselements 20.

Das Dämpfungselement 20 weist einen Dämpfungsabschnitt 22 und einen Montageabschnitt 32 auf.

Das Dämpfungselement 20 ist additiv gefertigt. Das heißt, das Dämpfungselement 20 ist in einer Vielzahl von Materialschichten in einem additiven Fertigungsverfahren von einer additiven Fertigungsvorrichtung (z. B. 3D-Drucker) hergestellt. Vorzugsweise kann das Dämpfungselement 20 in einem additiven Pulverbett-Fertigungsverfahren hergestellt werden.

Im Einzelnen sind der Dämpfungsabschnitt 22 und der Montageabschnitt 32 aus mehreren aneinander angrenzenden Materialschichten gebildet. Die Materialschichten sind additiv gefertigt. Bevorzugt können die Materialschichten aus einem elastisch verformbaren Kunststoff, vorzugsweise einem thermoplastischen Polyurethan (TPU), besonders bevorzugt TPU 95, sein.

Das Dämpfungselement 20 ist vorzugsweise einteilig. Bevorzugt können der Dämpfungsabschnitt 22 und der Montageabschnitt 32 direkt ineinander übergehen und/oder integral-einstückig miteinander verbunden sein.

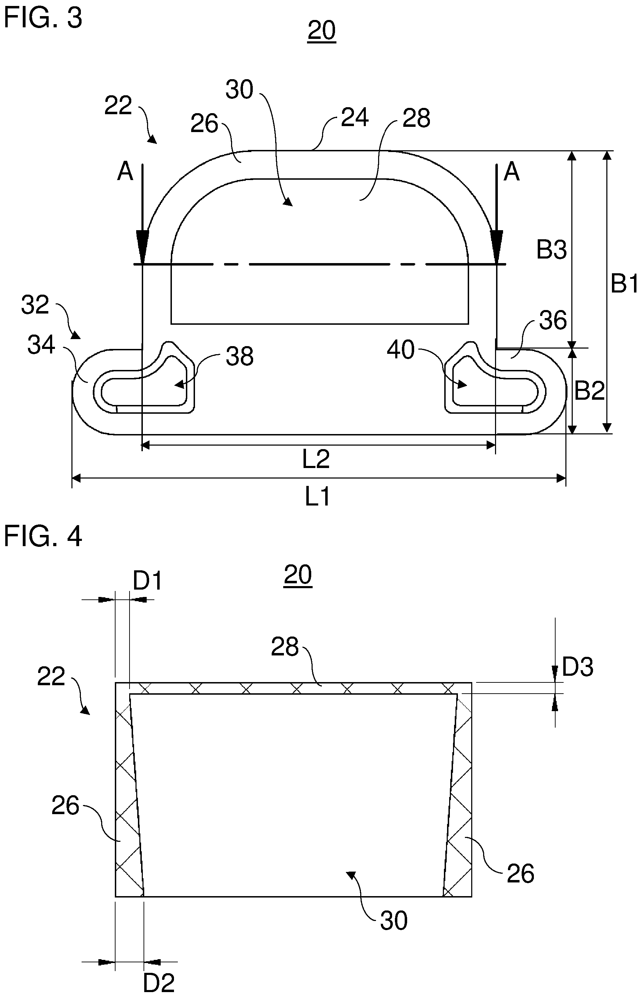

Wie in den Figuren 2 und 3 beispielhaft dargestellt ist, kann eine gemeinsame Außenkontur von Dämpfungsabschnitt 22 und Montageabschnitt 32 im Wesentlichen einer Hutaußenkontur entsprechen. Die Hutaußenkontur ist bevorzugt eine Melonenhutaußenkontur. Optional kann hierbei der Dämpfungsabschnitt 22 eine Hutkrone der Hutaußenkontur bilden. Der Montageabschnitt 32 kann eine Hutkrempe der Hutaußenkontur bilden.

Der Dämpfungsabschnitt 22 weist eine Kontaktfläche 24 auf. Bevorzugt kann der Dämpfungsabschnitt 22 eine Kontaktlippe 26, eine Seitenwand 28 und/oder eine (Dämpfungsabschnitt-) Ausnehmung 30 aufweisen.

Die Kontaktfläche 24 dient zum Kontaktieren des Behälters 12 beim Dämpfen des Aufnehmens des Behälters 12 in der Behälteraufnahmetasche 18 (siehe Figur 1). Bevorzugt kann die Kontaktfläche 24 sich plan in einer Ebene erstrecken.

Im Einbauzustand kann die Kontaktfläche 24 dem Behälter 12 bzw. einem Inneren des Behälteraufnahmetasche 18 zugewandt sein. Im Einbauzustand kann die Kontaktfläche 24 senkrecht ausgerichtet sein.

Die Kontaktfläche 24 kann an der Kontaktlippe 26 angeordnet sein. Bevorzugt kann die Kontaktfläche 24 an einem Scheitelbereich der Kontaktlippe 26 angeordnet sein.

Bevorzugt kann die Kontaktfläche 24 aufgeraut sein. Beispielsweise kann die Kontaktfläche 24 eine vorbestimmte Profilierung, Texturierung und/oder Musterung aufweisen. Bevorzugt kann dadurch eine Reibung zwischen dem Behälter 12 und der Kontaktfläche 24 erhöht werden. Die Aufrauhung (Profilierung, Texturierung und/oder Musterung) kann vorzugsweise direkt beim additiven Fertigen des Dämpfungsabschnitts 22 mitgefertigt werden. Vorzugsweise kann die Aufrauhung als Unterbrechungen in den aneinander angrenzenden Materialschichten gebildet sein.

Die Kontaktlippe 26 ist vorzugsweise bogenförmig, besonders bevorzugt C-förmig. Die Kontaktlippe 26 kann sich beispielsweise bogenförmig zwischen voneinander beabstandeten Enden/Endbereichen 34, 36 des Montageabschnitts 32 erstrecken.

Die Kontaktlippe 26 kann direkt mit der Seitenwand 28 verbunden sein. Vorzugsweise kann die Seitenwand 28 an einer, bevorzugt bogenförmigen, Längskante der Kontaktlippe 26 und/oder entlang eines gesamten Längsverlaufs der Kontaktlippe 26 mit der Kontaktlippe 26 verbunden sein. Die Kontaktlippe 26 kann bspw. senkrecht auf der Seitenwand 28 stehen.

Wie in Figur 4 dargestellt ist, kann die Kontaktlippe 26 einen keilförmigen Querschnitt aufweisen. Der Querschnitt kann in einer Ebene senkrecht zu einem Längsverlauf der Kontaktlippe 26 liegen. Bevorzugt können die Querschnitte der Kontaktlippe 26 entlang des gesamten (z. B. bogenförmigen) Längsverlaufs der Kontaktlippe 26 keilförmig sein.

Wie ebenfalls in Figur 4 dargestellt ist, kann die Kontaktlippe 26 an einem Übergang zu der Seitenwand 28 eine Materialstärke D1 aufweisen, die kleiner ist als eine Materialstärke D2 an einem freien Ende bzw. an einem zu der Seitenwand 28 entgegengesetzten Ende der Kontaktlippe 26. Vorzugsweise kann sich eine Materialstärke der Kontaktlippe 26 ausgehend von der Materialstärke D1 an der Seitenwand 28 zu der Materialstärke D2 am freien Ende erhöhen, vorzugsweise stetig und/oder mit gleichmäßiger Steigung. Beispielsweise kann die Materialstärke D1 rd. 1 mm betragen, und die Materialstärke D2 kann rund 2 mm betragen.

Die Seitenwand 28 kann eine ebene Seitenwand sein. Im Einbauzustand kann die Seitenwand 28 vorzugsweise in einer Horizontalebene liegen. Im Einbauzustand kann die Seitenwand 28 vorzugsweise eine Oberseite des Dämpfungselements 20 sein.

Beispielsweise kann die Seitenwand 28 im Wesentlichen eine Rechteckform mit zwei auf der gleichen Seite der Seitenwand 28 abgerundeten Ecken aufweisen. Die abgerundeten Ecken können einem Verlauf der bogenförmigen Kontaktlippe 26 folgen. An der den abgerundeten Ecken gegenüberliegenden Seite der Seitenwand 28 kann die Seitenwand 28 in dem Montageabschnitt 32 übergehen.

Wie in Figur 4 dargestellt ist, kann die Seitenwand 28 eine Materialstärke D3 aufweisen. Die Materialstärke D3 kann kleiner sein als die Materialstärke D1 und/oder D2. Beispielsweise kann die Materialstärke D3 zwischen 0,4 mm und 1,5 mm, vorzugsweise zwischen 0,6 mm und 1 mm, bevorzugt rund 0,8 mm, sein.

Insgesamt kann der Dämpfungsabschnitt 22 eine Wannenform oder Schalenform aufweisen. Diese Form kann durch die Ausnehmung 30 gebildet sein. Die Ausnehmung 30 kann vorzugsweise zentral in Dämpfungsabschnitt 22 angeordnet sein. Bevorzugt kann die Ausnehmung 30 als eine Vertiefung ausgebildet sein.

Die Ausnehmung 30 kann seitlich von einer Innenseite der Kontaktlippe 26 und/oder von einer Innenseite des Montageabschnitts 32 begrenzt sein. Die Ausnehmung 30 kann bodenseitig von der Seitenwand 28 begrenzt sein.

Der Dämpfungsabschnitt 22 ist elastisch verformbar. Bevorzugt kann der Behälter 12 den Dämpfungsabschnitt 22 an der Kontaktfläche 24 kontaktieren. Der Dämpfungsabschnitt 22 kann sich dann zum Dämpfen bzw. Abbremsen des Behälters 12 elastisch nach innen verformen. Dabei können die Kontaktfläche 24 und die Kontaktlippe 26 sowie optional die Seitenwand 28 elastisch nach innen bzw. in die Ausnehmung 30 hinein verformt/gedrückt werden.

Der Montageabschnitt 32 dient zum Montieren des Dämpfungselements 20 in bzw. an der jeweiligen Behälteraufnahmetasche 18 des Transportsterns 10.

Der Montageabschnitt 32 kann länglich und/oder plattenförmig sein. Der Dämpfungsabschnitt 22 kann sich ausgehend von einem mittigen Bereich des Montageabschnitts 32 erstrecken.

Einander entgegengesetzten Ende 34, 36 des Montageabschnitts 32 können über den Dämpfungsabschnitt 22 überstehen, z. B. bezüglich einer Längsachse des Montageabschnitts 32. Die Enden 34, 36 können als Ohren- oder Flügelabschnitte des Dämpfungselements 22 angeordnet bzw. ausgeführt sein. Die Enden 34, 36 sind bevorzugt abgerundet.

Bevorzugt können die Enden 34, 36 des Montageabschnitts 32 jeweils eine (Montageabschnitt-) Ausnehmung 38, 40 aufweisen. Die Ausnehmungen 38, 40 sind bevorzugt als Vertiefungen ausgebildet.

Bevorzugt kann der Montageabschnitt 32 elastisch verformbar sein. Vorzugsweise kann damit eine Montage des Dämpfungselements 20 in/an der Behälteraufnahmetasche 18 erleichtert werden.

Die Enden 34, 36 können bei der Montage aufgrund der Ausnehmungen 38, 40 zusammengedrückt werden, um den Montageabschnitt 32 in eine entsprechend geformte Aufnahme in der Behälteraufnahmetasche 18 anzuordnen und dort dann bspw. form- und/oder kraftschlüssig zu sichern.

Wie in Figur 3 dargestellt ist, kann/können das Dämpfungselement 20 und/oder der Montageabschnitt 32 bspw. eine Gesamtlänge L1 zwischen 20 mm und 50 mm, vorzugsweise zwischen 30 mm und 40 mm, bevorzugt rd. 35 mm, aufweisen. Der Dämpfungsabschnitt 22 kann bspw. eine Gesamtlänge L2 zwischen 15 mm und 35 mm, vorzugsweise zwischen 20 mm und 30 mm, bevorzugt rd. 25 mm, aufweisen.

Wie ebenfalls in Figur 3 dargestellt ist, kann das Dämpfungselement 20 bspw. eine Gesamtbreite B1 zwischen 10 mm und 30 mm, vorzugsweise zwischen 15 mm und 25 mm, bevorzugt rd. 20 mm, aufweisen. Der Montageabschnitt 32 kann bspw. eine Gesamtbreite B2 zwischen 4 mm und 8 mm, vorzugsweise zwischen 5 mm und 7 mm, aufweisen. Der Dämpfungsabschnitt 22 kann eine Gesamtbreite B3 zwischen 8 mm und 18 mm, vorzugsweise zwischen 10 mm und 16 mm, aufweisen.

Wie in Figur 2 dargestellt ist, kann/können das Dämpfungselement 20 und/oder der Dämpfungsabschnitt 22 und/oder der Montageabschnitt 32 eine Gesamthöhe H zwischen 10 mm und 20 mm, vorzugsweise zwischen 12 mm und 18 mm, bevorzugt rd. 15 mm, aufweisen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Dämpfungsabschnitts und/oder des Montageabschnitts des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Transportstern
- 12: Behälter
- 14: Sternplatte
- 16: Sternplatte
- 18: Behälteraufnahmetasche
- 20: Dämpfungselement
- 22: Dämpfungsabschnitt
- 24: Kontaktfläche
- 26: Kontaktlippe
- 28: Seitenwand
- 30: Ausnehmung
- 32: Montageabschnitt
- 34: erstes Ende
- 36: zweites Ende
- 38: erste Ausnehmung
- 40: zweite Ausnehmung

- D1-D3: Materialstärke
- B1: Dämpfungselement-Gesamtbreite
- B2: Montageabschnitt-Gesamtbreite
- B3: Dämpfungsabschnitt-Gesamtbreite
- L1: Dämpfungselement-Gesamtlänge / Montageabschnitt-Gesamtlänge
- L2: Dämpfungsabschnitt-Gesamtlänge
- H: Gesamthöhe

## Patentansprüche

1. Dämpfungselement (20) für eine Behälteraufnahmetasche (18) eines Behältertransportsterns (10), wobei das Dämpfungselement (20) aufweist:
einen elastisch verformbaren Dämpfungsabschnitt (22), der eine Kontaktfläche (24) zum Kontaktieren eines Behälters (12) aufweist; und
einen, vorzugsweise elastisch verformbaren, Montageabschnitt (32) zum Montieren des Dämpfungselements (20) in der Behälteraufnahmetasche (18) des Behältertransportsterns (10),
wobei der Dämpfungsabschnitt (22) und der Montageabschnitt (32) aus mehreren aneinander angrenzenden, vorzugsweise additiv gefertigten, Materialschichten gebildet sind.

2. Dämpfungselement (20) nach Anspruch 1, wobei:
die Materialschichten aus einem elastisch verformbaren Kunststoff, vorzugsweise einem thermoplastischen Polyurethan (TPU), besonders bevorzugt ein TPU mit einer Shore-Härte A zwischen 70 und 95, sind; und/oder
das Dämpfungselement (20) insgesamt konstruktionsbedingt und materialbedingt eine Shore-Härte A zwischen 30 und 90, vorzugsweise zwischen 30 und 80, besonders bevorzugt zwischen 30 und 50, aufweist.

3. Dämpfungselement (20) nach Anspruch 1 oder Anspruch 2, wobei:
die Kontaktfläche (24) aufgeraut ist; und/oder
die Kontaktfläche (24) eine vorbestimmte Profilierung, Texturierung oder Musterung aufweist, zum Erhöhen einer Reibung zwischen dem Behälter (12) und der Kontaktfläche (24).

4. Dämpfungselement (20) nach einem der vorherigen Ansprüche, wobei mindestens eines erfüllt ist von:
der Dämpfungsabschnitt (22) und der Montageabschnitt (32) gehen direkt ineinander über;
der Dämpfungsabschnitt (22) und der Montageabschnitt (32) sind integral-einstückig miteinander verbunden; und
das Dämpfungselement (20) ist einteilig.

5. Dämpfungselement (20) nach einem der vorherigen Ansprüche, wobei:
eine gemeinsame Außenkontur, die durch den Dämpfungsabschnitt (22) und den Montageabschnitt (32) gebildet ist, im Wesentlichen einer Hutaußenkontur, vorzugsweise einer Melonenhutaußenkontur, entspricht, und optional
der Dämpfungsabschnitt (22) eine Hutkrone der Hutaußenkontur bildet; und
der Montageabschnitt (32) eine Hutkrempe der Hutaußenkontur bildet.

6. Dämpfungselement (20) nach einem der vorherigen Ansprüche, wobei:
der Dämpfungsabschnitt (22) eine Wannenform oder Schalenform aufweist; und/oder
der Dämpfungsabschnitt (22) eine, vorzugsweise zentrale, Ausnehmung (30), vorzugsweise Vertiefung, aufweist.

7. Dämpfungselement (20) nach einem der vorherigen Ansprüche, wobei:
der Dämpfungsabschnitt (22) eine Kontaktlippe (26) aufweist, an der die Kontaktfläche (24) angeordnet ist.

8. Dämpfungselement nach Anspruch 7, wobei mindestens eines erfüllt ist von:
die Kontaktlippe (26) ist bogenförmig, vorzugsweise C-förmig;
die Kontaktfläche (24) ist in einem Scheitelbereich der Kontaktlippe (26) angeordnet;
die Kontaktlippe (26) begrenzt eine Ausnehmung (30), vorzugsweise Vertiefung, des Dämpfungsabschnitts (22) seitlich; und
eine Materialstärke der Kontaktlippe (26) erhöht sich hin zu einem freien Ende der Kontaktlippe (26), vorzugsweise kontinuierlich und/oder gleichmäßig, und
die Kontaktlippe (26) weist einen im Wesentlichen keilförmigen Querschnitt in einer Ebene senkrecht zu einem Längsverlauf der Kontaktlippe (26) auf.

9. Dämpfungselement (20) nach Anspruch 7 oder Anspruch 8, wobei:
der Dämpfungsabschnitt (22) ferner eine Seitenwand (28) aufweist, die mit der Kontaktlippe (26) verbunden ist, vorzugsweise an einer Längskante der Kontaktlippe (26) und/oder entlang eines gesamten Längsverlaufs der Kontaktlippe (26).

10. Dämpfungselement (20) nach Anspruch 9, wobei:
die Seitenwand (28) eine Ausnehmung (30), vorzugsweise Vertiefung, des Dämpfungsabschnitts (22) bodenseitig begrenzt; und/oder
die Kontaktlippe (26) senkrecht auf der Seitenwand (28) steht.

11. Dämpfungselement (20) nach Anspruch 9 oder Anspruch 10, wobei:
die Seitenwand (28) eine Materialstärke (D3) zwischen 0,4 mm und 1,5 mm, vorzugsweise zwischen 0,6 mm und 1 mm, bevorzugt rund 0,8 mm, aufweist; und/oder
sich eine Materialstärke (D1, D2) der Kontaktlippe (26) ausgehend von der Seitenwand (28) in eine Richtung weg von der Seitenwand (28) und/oder hin zu einem freien Ende der Kontaktlippe (26), vorzugsweise stetig und/oder gleichmäßig, erhöht, vorzugsweise von rd. 1 mm an der Seitenwand (28) zu rd. 2 mm an dem freien Ende.

12. Dämpfungselement (20) nach einem der vorherigen Ansprüche, wobei mindestens eines erfüllt ist von:
der Montageabschnitt (32) ist länglich und/oder plattenförmig;
der Dämpfungsabschnitt (22) erstreckt sich ausgehend von einem mittigen Bereich des Montageabschnitts (32);
der Montageabschnitt (32) begrenzt eine Ausnehmung (30), vorzugsweise Vertiefung, des Dämpfungsabschnitts (22) seitlich; und
einander entgegengesetzte Enden (34, 36) des Montageabschnitts (32) stehen über den Dämpfungsabschnitt (22) über und/oder weisen jeweils eine Ausnehmung (38, 40), vorzugsweise Vertiefung, auf.

13. Transportstern (10) zum Transportieren von Behältern (12), wobei der Transportstern (10) aufweist:
mehrere Dämpfungselemente (20) nach einem der vorherigen Ansprüche; und
mindestens eine Sternplatte (14, 16), die verteilt um ihren Umfang mehrere, vorzugsweise bogenförmige, Behälteraufnahmetaschen (18) aufweist, wobei in den Behälteraufnahmetaschen (18) jeweils mindestens eines, vorzugsweise zwei, der mehreren Dämpfungselemente (20) zum Dämpfen einer Aufnahme eines Behälters (12) in der jeweiligen Behälteraufnahmetasche (18) angeordnet ist.

14. Verfahren zum Herstellen eines Dämpfungselements (10) nach einem der Ansprüche 1 bis 12, wobei das Verfahren aufweist:
additives Fertigen des Dämpfungselements (10) mit dem Dämpfungsabschnitt (22) und dem Montageabschnitt (32) auf, vorzugsweise in einem additiven Pulverbett-Fertigungsverfahren.

15. Computerprogrammprodukt aufweisend Anweisungen, die eine additive Fertigungsvorrichtung veranlassen:
ein Dämpfungselement (20) nach einem der Ansprüche 1 bis 12 in einer Vielzahl von Materialschichten in einem additiven Fertigungsverfahren, vorzugsweise additiven Pulverbett-Fertigungsverfahren, herzustellen.
